# EUROPÄISCHE PATENTANMELDUNG

(11) **EP 2 116 789 A2**
(43) Veröffentlichungstag der Anmeldung: **11.11.2009**
(21) Anmeldenummer: 09005925.4
(22) Anmeldetag: 29.04.2009
(51) Int. Cl.: F24H 1/08, F24H 1/12, F24H 9/02

(54) **Kompakt-Heizzentrale**

(30) Priorität: 05.05.2008 DE 102008022150; 13.05.2008 DE 102008023254
(71) Anmelder: MHG Heiztechnik GmbH, 21244 Buchholz in der Nordheide (DE)
(72) Erfinder: Niedermayer, Markus, 28357 Bremen (DE)
(74) Vertreter: Richter, Werdermann, Gerbaulet & Hofmann

(57) **Zusammenfassung**

Um den Raum- und Installationsbedarf für eine Heizanlage zu reduzieren, wird eine Kompakt-Heizzentrale mit einem Gehäuse (11) für eine Heizanlage zur Wärmeenergieversorgung von Gebäuden vorgesehen, wobei innerhalb des Gehäuses ein Pufferspeicherbehälter (10) zur Wärmespeicherung und -abgabe, eine erste Wärmequelle (20), die mit dem Pufferspeicherbehälter (10) zum Wärmeaustausch verbunden ist und eine zweite Wärmequelle (30), die mit dem Pufferspeicherbehälter (10) zum Wärmeaustausch verbunden ist, angeordnet sind.

## Beschreibung

Die Erfindung betrifft eine Kompakt-Heizzentrale für eine Heizanlage zur Wärmeenergieversorgung von Gebäuden.

Bekannte Heizanlagen bzw. -systeme für Gebäude bzw. Häuser umfassen u. a. normalerweise wenigstens einen Pufferspeicherbehälter, in dem ein Wärmeträgermedium, beispielsweise Wasser, vorhanden ist, so dass der Pufferspeicherbehälter zur Wärmespeicherung und -abgabe ausgebildet ist. Ferner umfassen Heizanlagen wenigstens eine Wärmequelle, beispielsweise einen Öl- bzw. Gaskessel, die zur Erwärmung des Wärmespeichermediums im Pufferspeicherbehälter ausgebildet und zu diesem Zweck mit letzterem verbunden sind.

Im Zuge des allgemeinen Bestrebens den Energiebedarf von Heizanlagen für Gebäude zu reduzieren, werden vermehrt, z. B. in Niedrigenergiehäusem u. dgl., weitere Wärmequellen in die Heizanlage integriert. Diese alternativen Wärmequellen, beispielsweise Wärmepumpen, Solar-Kollektor-Systeme u. dgl., tragen dazu bei, dass die Energie, die dem System bzw. der Heizanlage vom Brennwertkessel zugeführt werden muss, reduziert werden kann.

Bei bekannten Heizanlagen bzw. -systemen sind die einzelnen Komponenten der Heizanlage als separate Bauteile ausgeführt. So bildet beispielsweise der Pufferspeicher und jede Wärmequelle ein einzelnes, separates Bauteil. Zur Installation dieser einzelnen Bauteile in einem Gebäude ist typischerweise im Gebäude ein separater Raum, z.B. der sogenannte Heizungsraum, vorgesehen, der entsprechend groß sein muss, um sämtliche Bauteile und die die einzelnen Bauteile verbindenden Leitungen aufzunehmen. Somit ergibt sich bei derartigen, modernen Heizanlagen mit vielen Komponenten bzw. Wärmequellen ein erhöhter Raum- und Installationsbedarf.

Daher ist es Aufgabe der vorliegenden Erfindung, den Raum- und Installationsbedarf für eine Heizanlage und die damit einhergehenden Kosten zu reduzieren. Diese Aufgabe wird durch eine Kompakt-Heizzentrale mit den Merkmalen des Anspruchs 1 gelöst.

Der Kerngedanke der Erfindung besteht demnach darin, eine Heizzentrale bzw. eine zentrale Sammel- und Verteileinrichtung für eine Heizanlage vorzusehen, die ein Gehäuse umfasst, innerhalb dessen mehrere der einzelnen Komponenten der Heizanlage angeordnet sind. Insbesondere sind innerhalb des Gehäuses ein Pufferspeicherbehälter zur Wärmespeicherung und Wärmeabgabe, eine erste Wärmequelle, die mit dem Pufferspeicherbehälter zum Wärmeaustausch verbunden ist sowie eine zweite Wärmequelle, die mit dem Pufferspeicherbehälter zum Wärmeaustausch verbunden ist, angeordnet. Dadurch, dass sämtliche genannten Komponenten der Heizanlage innerhalb eines Gehäuses angeordnet sind, ergibt sich eine äußerst kompakte Ausbildung der Heizzentrale. Somit ist es nun auch bei Niedrigenergiehäusern u. dgl. möglich, eine einzige, innerhalb eines Gehäuses eingeschlossene Heizzentrale im Gebäude vorzusehen, in der alle relevanten Komponenten der Heizanlage enthalten sind und an die nur noch die notwendigen Leitungen, beispielsweise des Heizkreises oder des Brauchwasserkreises, angeschlossen werden müssen. Somit wird der Platzbedarf für die Heizanlage deutlich reduziert und auch die Installation der Heizanlage kann schneller und kostengünstiger von statten gehen. Eine Komplettmontage der Kompakt-Heizzentrale ist in kürzester Zeit möglich.

Das Gehäuse kann in der Art eines Rahmens bzw. einer Verkleidung geschlossen oder auch teilweise offen ausgebildet sein. Auch ist es möglich, dass einige der Komponenten innerhalb des Gehäuses, beispielsweise der Pufferspeicherbehälter, einen Teil des eigentlichen, äußeren Gehäuses bilden. Bevorzugt wird das Gehäuse aus einem inneren Rahmengerüst gebildet, auf das von außen Blechplatten o. dgl. aufgesetzt werden.

Die Heizzentrale kann als ein fertiges Bauteil ausgeführt sein, das als solches in einem Stück in dem jeweiligen Gebäude installierbar ist. Jedoch ist es auch möglich, die Heizzentrale in Modulbauweise auszuführen, so dass die einzelnen Komponenten der Zentrale vor Ort im Zuge der Montage in einen dafür vorgesehenen Rahmen bzw. in ein dafür vorgesehenes Gehäuse installiert bzw. montiert werden.

Bevorzugte Ausführungsformen der Erfindung sind in den Unteransprüchen gekennzeichnet.

In einer bevorzugten Ausführungsform der Erfindung ist innerhalb des Gehäuses der Heizzentrale ein erster Wärmetauscher zum Wärmeaustausch mit dem Pufferspeicherbehälter vorgesehen, der mit einer dritten Wärmequelle verbindbar ist. Die dritte Wärmequelle wird normalerweise eine externe Wärmequelle sein, die über entsprechende Leitungen mit dem dafür in der Heizzentrale vorgesehenen ersten Wärmetauscher zu verbinden ist. Grundsätzlich wäre es aber auch möglich, eine weitere, dritte Wärmequelle im Gehäuse der Heizzentrale vorzusehen.

Wärmetauscher sind üblicherweise als Heizschlangen bzw. -wendeln ausgeführt, in denen ein Wärmemittel, z.B. Wasser, angeordnet ist und die innerhalb des Pufferspeicherbehälters verlaufen, so dass Wärmeenergie von den Heizschlangen an das innerhalb des Pufferspeicherbehälters befindliche Wärmeträgermedium (z. B. Wasser) übertragen werden kann. Ferner sollte zweckmäßigerweise im Pufferspeicherbehälter ein weiterer Wärmetauscher angeordnet sein, der an einen Heizkreis des Gebäudes anschließbar ist. Dieser Wärmetauscher entzieht dem Wärmeträgermedium innerhalb des Pufferspeicherbehälters Wärmeenergie, um diese an die Verbraucher des Heizkreises weiter zu leiten. Ferner wird mit der erfindungsgemäßen Heizzentrale bevorzugterweise das Brauchwasser im Durchlaufverfahren erwärmt, so dass im Pufferspeicherbehälter ein weiterer Wärmetauscher zum Anschluss an den Brauchwasserkreis vorzusehen ist.

In einer weiteren bevorzugten Ausführungsform der Erfindung ist die erste oder die zweite Wärmequelle ein Brennwertkessel, insbesondere ein durch Öl oder Gas betriebener Brennwertkessel. Ein für die Heizzentrale zu verwendender, geeigneter Gasbrennwertkessel könnte beispielsweise eine maximale Nennwärmebelastung von 25 kW aufweisen. Die andere innerhalb der Heizzentrale angeordnete Wärmequelle ist bevorzugterweise eine Wärmepumpe, z.B. eine 7 kW Luft-/Wasserwärmepumpe. Darüber hinaus ist der erste Wärmetauscher der Heizzentrale bevorzugterweise zum Anschluss an einen Solarkreis eines Solar-Kollektor-Systems vorgesehen. Durch eine derartige Ausführung der ersten und zweiten Wärmequelle und des ersten Wärmetauschers wird die Heizanlage den Anforderungen, die heutzutage an Niedrigenergiehäuser gestellt werden, gerecht. Die Heizzentrale wird zunächst versuchen, den Gebäudeenergiebedarf durch regenerative Energien, nämlich durch im Solarkreis erzeugte Solarenergie und ggf. durch die beispielsweise aus Luft oder Erdwärme gewonnene Energie der Wärmepumpe, zu decken. Nur wenn dieses nicht möglich sein sollte, wird zusätzlich ein Brennwertkessel hinzugeschaltet. Insgesamt wird dadurch der Energieanteil der fossilen Energie verringert.

Alternativ kann anstatt eines Brennwertkessels ein elektrisch betriebener Durchlauferhitzer verwendet werden. Entsprechend wird der Durchlauferhitzer ebenfalls innerhalb des Gehäuses angeordnet und sein Vor- und Rücklauf wird direkt an den Pufferspeicherbehälter angeschlossen. Eine derartig ausgeführte Kompakt-Heizzentrale kommt daher ganz ohne die Verwendung fossiler Brennstoffe aus und benötigt, falls der Gebäudeenergiebedarf nicht durch regenerative Energien allein gedeckt werden kann, ausschließlich elektrische Energie für Ihre internen Wärmequellen (Durchlauferhitzer und Wärmepumpe). Grundsätzlich ist es auch möglich, den Durchlauferhitzer anstelle der Wärmepumpe vorzusehen, so dass der Brennwertkessel die erste und der Durchlauferhitzer die zweite Wärmequelle bildet.

Weiterhin ist es zweckmäßig, ein Anschlussmittel vorzusehen, mittels dessen eine vierte, vorzugsweise externe Wärmequelle mit dem Pufferspeicherbehälter zum Wärmeaustausch verbindbar ist. Hierdurch wird die Flexibilität des Einsatzes der erfindungsgemäßen Heizzentrale weiter verbessert. Je nach den vorhandenen Gegebenheiten des jeweiligen Gebäudes ist es nämlich nun möglich, eventuell vorhandene, weitere Wärmequellen, beispielsweise einen Feststoffbrenner, eine Pelletsheizung, einen Kamin, eine Abwärmeheizung etc., mit dem Heizsystem zu verbinden bzw. diese in die Heizanlage zu integrieren. Hierfür muss lediglich die bereits im Gebäude vorhandene vierte Wärmequelle über in der Heizzentrale bereits vorgesehene entsprechende Anschlüsse angeschlossen werden. Der hiermit verbundene Installations- bzw. Montageaufwand ist äußerst gering. Grundsätzlich ist es ferner möglich in der Wärmezentrale weitere Anschlüsse bzw. Wärmetauscher zum Anschluss weiterer Wärmequellen vorzusehen.

Zweckmäßigerweise ist in die Heizzentrale eine Regelungseinrichtung integriert, die zur Regelung der verschiedenen Wärmequellen bzw. Heizkreise ausgebildet ist. Hierdurch werden die Bedienungsfreundlichkeit der Heizzentrale sowie die Einfachheit der Installation bzw. Montage weiter verbessert. Da die Regelungseinrichtung bereits in der Heizzentrale integriert ist, ist diese zweckmäßigerweise bereits vorprogrammiert, so dass sie die vorhandenen bzw. anzuschließenden Wärmequellen nach einem im Vorwege festgelegten Ablaufschema regelt bzw. ansteuert. Zum einen muss dadurch keine gesonderte Regelungseinrichtung bei der Installation der Heizanlage mehr vorgesehen werden. Zum anderen kann die bereits vorprogrammierte Regelungseinrichtung nach Montage unmittelbar ihren Betrieb aufnehmen und muss nicht mehr vom Benutzer bzw. Monteur gesondert eingestellt werden.

Bevorzugterweise ist die Regelungseinrichtung zur Regelung der gesamten Heizanlage bzw. des gesamten Heizsystems ausgebildet und regelt daher auch den Heizkreis und den Brauchwasserkreis bzw. deren Wärmetauscher sowie Mischerkreise u. dgl. Die Regelungseinrichtung wird zweckmäßigerweise derart voreingestellt sein, dass sich eine möglichst energiesparende Betriebsweise der Heizanlage ergibt.

Gemäß einer weiteren bevorzugten Ausführungsform der Erfindung bildet die Querschnittsfläche des Pufferspeicherbehälters ein Polygon. Mit anderen Worten ist der Pufferspeicherbehälter somit nicht, wie allgemein üblich, zylindrisch ausgebildet, sondern in einer abweichenden Form, bevorzugt als Quader. Hierdurch ist es möglich, den Pufferspeicherbehälter besser an die Abmaße bzw. Geometrie des Gehäuses, welches normalerweise ebenfalls quaderförmig ausgebildet ist, anzupassen und so den Raumbedarf der Heizzentrale weiter zu optimieren. Gleichzeitig kann sichergestellt werden, dass bei relativ geringem Raumbedarf eine ausreichende Menge Wärmeträgermedium, beispielsweise 500 l Wasser, im Pufferspeicherbehälter Platz findet.

Da der Pufferspeicherbehälter gemäß der beschriebenen, bevorzugten Ausführungsform nicht zylindrisch ausgebildet ist, ist es zweckmäßig, den Behälter drucklos zu gestalten. Hierfür ist bevorzugterweise ein Druckausgleichbehälter am Pufferspeicherbehälter, insbesondere in dessen oberem Bereich, vorgesehen. Die drucklose Ausführung des Pufferspeicherbehälters ist zweckmäßig, da ein quaderförmiger Behälter weniger druckresistent ist als beispielsweise ein zylindrischer.

Um die kompakte Bauweise der Heizzentrale weiter zu verbessern und den Platzbedarf der Zentrale im Gebäude weiter zu verringern ist es ferner bevorzugt, die notwendigen Anschlüsse, bspw. zum Anschluss der dritten und/oder vierten Wärmequelle, des Heizkreises und/oder des Brauchwasserkreises, im Bereich der Oberseite des Gehäuses vorzusehen. Mit anderen Worten werden die Anschlüsse nach oben hin geführt, wodurch die Rückseite des Gehäuses der Heizzentrale eben ausgeführt werden und somit bündig an einer Gebäudewand anliegen kann. Sollten einige der notwendigen Anschlüsse aus Raum- bzw. sonstigen technischen Gründen nicht nach oben ausgeführt werden können, sind diese zweckmäßigerweise an den Seitenflächen der Heizzentrale vorzusehen, wobei bevorzugterweise jeder dieser seitlichen Anschlüsse sowohl rechts als auch links ausgeführt ist. Insbesondere können an den Seitenwänden Anschlüsse für einen Kältemittelkreis für die Wärmepumpe als auch Anschlüsse zur Ableitung des anfallenden Kondensats vorgesehen sein. Hierdurch ist es möglich, die Heizzentrale in Eckbereichen eines Raumes eines Gebäudes anzuordnen, so dass diese bündig mit der Hinterseite und einer Seitenwand an den Raumwänden anliegt. Hierdurch wird der Platzbedarf der Heizzentrale weiter reduziert. In der Heiz- bzw. Wärmezentrale vorzusehende Kondensatableitungen u. dgl. sind zweckmäßigerweise ebenfalls im seitlichen Bereich der Heizzentrale angeordnet.

In einer weiteren bevorzugten Ausführungsform ist wenigstens eine der Wärmequellen, insbesondere eine Wärmepumpe, als Wärme-/Kühlquelle ausgebildet. Eine derartige Wärme-/Kühlquelle kann im "reversiblen Betrieb" gefahren werden, d. h., sie kann sowohl zum Erwärmen des Wärmeträgermediums im Pufferspeicherbehälter als auch zum Abkühlen desselben (beispielsweise im Sommer) ausgebildet sein. Ein derartiger "reversibler Betrieb" der Wärme-/Kühlquelle ist u. a. im Rahmen der Auslegung der Regelungseinrichtung entsprechend zu berücksichtigen. Bevorzugterweise ist bei dieser Ausführungsform im Wärmepumpenkreis ein (3-Wege- )Ventil (Schaltmittel) vorgesehen, mittels dessen die Wärmepumpe wahlweise in einen der beiden Betriebszustände geschaltet werden kann. Zu diesem Zweck ist vorteilhafterweise die Regelungseinrichtung der Heizzentrale zur Ansteuerung des Ventils ausgebildet.

Die Kompakt-Heizzentrale kann als ein kompaktes Bauteil oder aber als eine Ansammlung einzelner Module vorgesehen sein, die dann wiederum am Einbauort von einem Monteur zu einer Kompakt-Heizzentrale zusammensetzbar sind, d. h., sie kann an verschiedenen Einsatzorten und unter unterschiedlichen Einbaugegebenheiten eingesetzt werden.

Weiterhin sieht die Erfindung ein Verfahren zur Regelung einer Heizanlage zur Wärmeenergieversorgung von Gebäuden vor, wobei die Heizanlage einen Brennwertkessel, insbesondere einen mit Gas oder Öl betriebenen Brennwertkessel, eine Wärmepumpe, einen Solarkreis, eine vierte Wärmequelle und eine Regelungseinrichtung umfasst, wobei die Regelungseinrichtung einen bestimmten Energiebedarf zur Erwärmung des Gebäudes feststellt, die vierte Wärmequelle zur Abgabe von Wärmeenergie ansteuert, bei Nichtdeckung des festgestellten Wärmeenergiebedarfs zusätzlich den Solarkreis zur Abgabe von Wärmeenergie ansteuert, bei Nichtdeckung des festgestellten Wärmeenergiebedarfs zusätzlich die Wärmepumpe zur Abgabe von Wärmeenergie ansteuert, und bei Nichtdeckung des festgestellten Wärmeenergiebedarfs zusätzlich den Brennwertkessel zur Abgabe von Wärmeenergie ansteuert. Die Regelungseinrichtung prüft somit nach jeder Ansteuerung einer Wärmequelle, ob diese zur Deckung des festgestellten, benötigten Energiebedarfs ausreicht. Erst wenn eine Nichtdeckung festgestellt wird, wird die in der vorgegebenen Hierarchie nächstliegende Wärmequelle angesteuert. Die Überprüfung der Deckung des Energiebedarfs ist zweckmäßigerweise fortlaufend oder nach vorgegebenen Abständen durchzuführen.

Durch das beschriebene Verfahren ergibt sich eine besonders energiesparende Betriebsweise einer Heizanlage. Die vierte Wärmequelle ist häufig dergestalt, dass sie in Abhängigkeit von außerhalb der Heizanlage begründeten Umständen nur zu gewissen Zeitpunkten Energie liefert. Dieses ist beispielsweise bei Kaminen, Abwärmeheizungen u. dgl. der Fall. Im letzteren Fall kann beispielsweise nur dann Wärmeenergie zur Verfügung gestellt werden, wenn das entsprechende, zur Abwärmeheizung gehörende, Abwärme erzeugende Gerät Abwärme erzeugt. Die Regelungseinrichtung prüft somit in einem ersten Schritt, ob Wärmeenergie von der vierten Wärmequelle zu einem gegebenen Zeitpunkt zur Verfügung gestellt werden kann, da diese Wärmeenergie ansonsten ungenutzt bleiben würde. In einer nächsten Stufe wird die Regelungseinrichtung dann versuchen, den Energiebedarf mittels des Solarkreises zu decken. Erst danach wird bei Bedarf die Wärmepumpe und ggf. der Brennwertkessel zugeschaltet. Hierdurch wird der Energieanteil aus fossilen Energieträgem möglichst gering gehalten. Ferner ist ein äußerst kostengünstiger Betrieb der Heizanlage möglich.

Bevorzugterweise wird für das beschriebene Verfahren eine Heizanlage mit einer Heizzentrale der in der vorstehenden Beschreibung und in den Ansprüchen beschriebenen Art bzw. eine hierfür geeignete Regelungseinrichtung einer Heizanlage bzw. -zentrale verwendet.

Ausführungsbeispiele der Erfindung werden nachstehend anhand der Zeichnungen näher erläutert. Es zeigen schematisch:
- Fig. 1: einen Hydraulikplan einer Heizzentrale;
- Fig. 2: einen Hydraulikplan einer weiteren Ausführungsform einer Heizzentrale, bei der die Wärmepumpe im reversiblen Betrieb gefahren werden kann;
- Fig. 3: eine perspektivische Ansicht einer Heizzentrale ohne Gehäuse;
- Fig. 4: eine perspektivische Ansicht einer Heizzentrale mit Gehäuse, und
- Fig. 5: eine perspektivische Ansicht eines weiteren Ausführungsbeispiels einer Heizzentrale ohne Gehäuse.

In den nachfolgend dargestellten, verschiedenen Ausführungsformen der Erfindung sind gleiche Bestandteile mit gleichen Bezugszeichen bezeichnet.

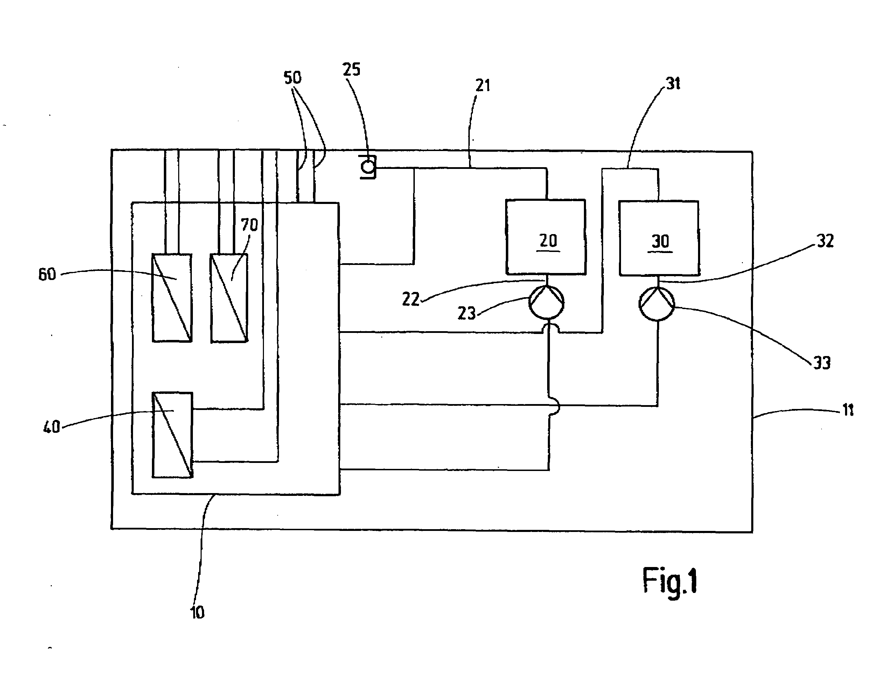

Fig. 1 zeigt einen Hydraulikplan einer erfindungsgemäßen Heizzentrale 100 für eine Heizanlage zur Wärmeenergieversorgung von Gebäuden. Die Heizzentrale 100 umfasst ein Gehäuse 11, innerhalb dessen die einzelnen Komponenten der Heizzentrale 100 angeordnet sind. Insbesondere ist innerhalb des Gehäuses 11 ein Pufferspeicherbehälter 10 angeordnet, der zur Aufnahme von Wasser und somit zur Speicherung und Abgabe von Wärmeenergie geeignet ist. Der Pufferspeicherbehälter 10 ist über dafür vorgesehene Anschlüsse mit einem Vorlauf 21 und einem Rücklauf 22 eines Kesselkreises verbunden, wobei für Vor- und Rücklauf jeweils ein separater Anschluss vorgesehen ist. Dieser Kesselkreis umfasst einen Gasbrennwertkessel 20 (erste Wärmequelle), einen Vorlauf 21, einen Rücklauf 22, eine Pumpe 23 sowie eine Sicherheitsgruppe 25, die ein Sicherheitsventil umfasst. Der gesamte Kesselkreis 21, 22, 23, 24, 25 ist innerhalb des Gehäuses 11 angeordnet. Ferner ist der Vorlauf 21 in einem oberen Bereich, wohingegen der Rücklauf in einem unteren Bereich an den Pufferspeicherbehälter 10 angeschlossen ist. Das vom Gasbrennwertkessel 20 erwärmte Wasser wird daher in einem oberen Bereich in den Pufferspeicherbehälter 10 eingespeist und kälteres Wasser wird diesem in einem unteren Bereich wieder entnommen.

Ferner sind am Pufferspeicherbehälter 10 Anschlüsse zum Anschluss des Vorlaufs 31 sowie des Rücklaufs 32 eines Wärmepumpenkreises vorgesehen. Der Wärmepumpenkreis umfasst eine Wärmepumpe 30 (zweite Wärmequelle), einen Vorlauf 31, einen Rücklauf 32 sowie eine Pumpe 33. Der Anschluss des Vorlaufes 31 ist ähnlich wie beim Kesselkreis oberhalb des Anschlusses für den Rücklauf 32 am Pufferspeicherbehälter 10 angeordnet, wobei beide Anschlüsse in Bezug auf eine Vertikalachse zwischen den Anschlüssen für den Kesselkreisvorlauf 21 und den Kesselkreisrücklauf 22 angeordnet sind.

Des Weiteren ist im Pufferspeicherbehälter 10 ein erster Wärmetauscher 40 angeordnet, der zum Anschluss an einen im Gebäude vorhandenen Solarkreis (hier nicht dargestellt) ausgebildet ist. Am Pufferspeicherbehälter 10 angeordnete Anschlüsse 50 sind zum Anschluss an den Kreis einer ebenfalls im zu erwärmenden Gebäude vorhandenen vierten Wärmequelle ausgebildet. Schließlich sind am Pufferspeicherbehälter 10 noch ein Heizkreis-Wärmetauscher 60 sowie ein Brauchwasserkreis-Wärmetauscher 70 angeordnet, die jeweils an einen Heizkreis mit Verbrauchern bzw. einen Brauchwasserkreis anschließbar sind. Alle genannten Wärmetauscher weisen jeweils Anschlüsse für einen Vor- und einen Rücklauf auf. Der Wärmetauscher 40 ist derart ausgebildet, dass er dem im Pufferspeicherbehälter 10 vorhandenen Wärmeträgermedium (Wasser) Wärmeenergie zuführen kann, wohingegen die Wärmetauscher 60, 70 zur Entnahme von Wärmeenergie aus dem Pufferspeicherbehälter 10 ausgebildet sind.

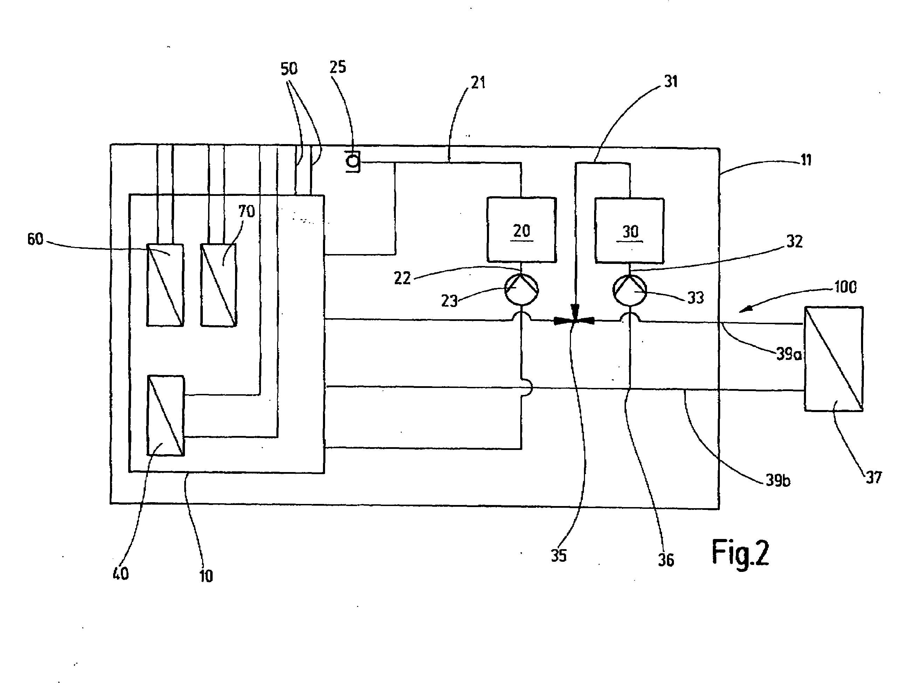

Fig. 2 zeigt einen Hydraulikplan einer weiteren Ausführungsform einer erfindungsgemäßen Heizzentrale 100. Der in Fig. 2 gezeigte Hydraulikplan stimmt zu weiten Teilen mit demjenigen der Ausführungsform aus Fig. 1 überein. Im Unterschied zur ersten Ausführungsform gemäß Fig. 1 ist bei der zweiten Ausführungsform die Wärmepumpe 30 im reversiblen Betrieb betreibbar. Hierfür ist im Vorlauf 31 ein Drei-Wege-Ventil 35 vorgesehen, von dem ein Kühlungsvorlauf 39a zu einem außerhalb der Heizzentrale 100 bzw. des Gehäuses 11 befindlichen Kühlungs-Wärmetauscher 37 verläuft. Von diesem Kühlungswärmetauscher 37 verläuft ein Kühlungsrücklauf 39b bis zu einem im Rücklauf 32 des Wärmepumpenkreises vorgesehenen T-Stück 36. Soll die Wärmepumpe 30 im Kühlbetrieb gefahren werden, steuert die Regelungseinrichtung (hier nicht dargestellt) das Drei-Wege-Ventil 35 entsprechend an, so dass das im Wärmepumpenkreis vorhandene Wärmeträgermedium durch den Kühlungs-Wärmetauscher 37 geleitet wird. Um eine Kühlung des jeweiligen Gebäudes zu erwirken, ist für den Kühlbetrieb ferner der Wärmepumpenkreis mit dem Heizkreis zum Wärmeaustausch zu verbinden. Ein derartiger Verbindungskreis ist aus Übersichtlichkeitsgründen in Fig. 2 nicht dargestellt.

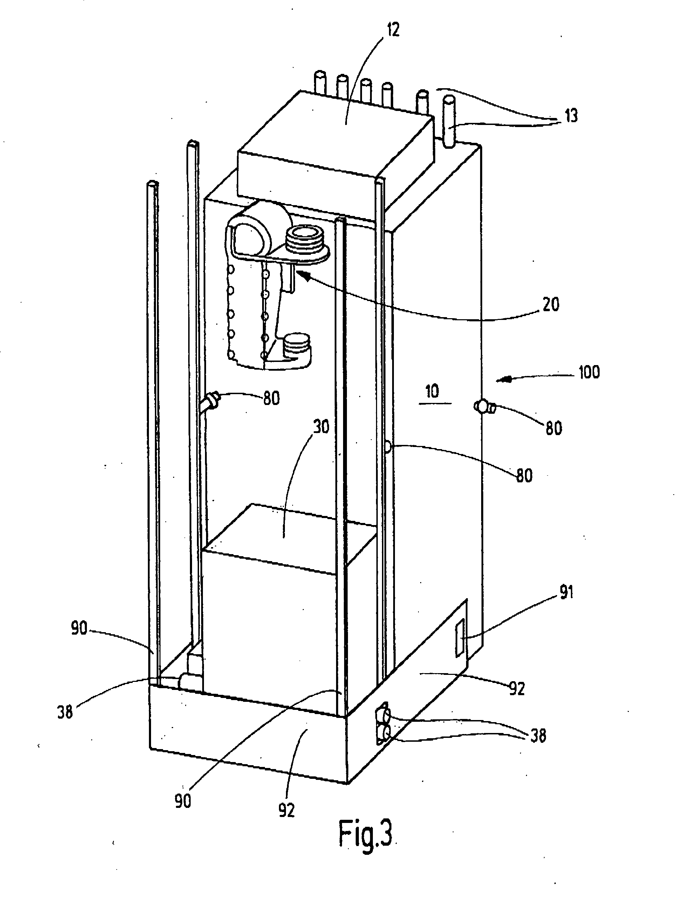

Fig. 3 zeigt eine perspektivische Ansicht einer Heizzentrale 100, bei der das die Heizzentrale umgebende Gehäuse aus Übersichtlichkeitsgründen weggelassen worden ist. Die Heizzentrale 100 umfasst einen quaderförmigen Pufferspeicherbehälter 10, auf dessen oberen Bereich ein Druckausgleichsbehälter 12 aufgesetzt ist. Der Pufferspeicherbehälter 10 weist daher eine rechteckige Querschnittsfläche auf und ist derart dimensioniert, dass er einen Großteil des Volumens der Heizzentrale 100 ausfüllt. Im vorderen, unteren Bereich der Heizzentrale 100 ist eine Wärmepumpe 30 vorgesehen, die von einem in etwa quaderförmigen Gehäuse umgeben ist und mit diesem bündig am Pufferspeicherbehälter 10 anliegt. Sowohl rechtsseitig als auch linksseitig sind an der Wärmepumpe 30 Anschlüsse 38 für eine Kältemittelmittelleitung vorgesehen, über die die Wärmepumpe bspw. mit einem Kühlungs-/Wärmetauscher außerhalb der Heizzentrale 100 zur Ermöglichung eines reversiblen Betriebs verbindbar ist. Im vorderen, oberen Bereich der Heizzentrale 100 ist ferner ein Gasbrennwertkessel 20 angeordnet, der zum Wärmeaustausch mit dem Pufferspeicherbehälter 10 verbunden ist. Interne Leitungen innerhalb der Heizzentrale 100, beispielsweise zur Verbindung der Wärmepumpe 30 mit dem Pufferspeicherbehälter 10 zum Wärmeaustausch, sind aus Übersichtlichkeitsgründen nicht dargestellt.

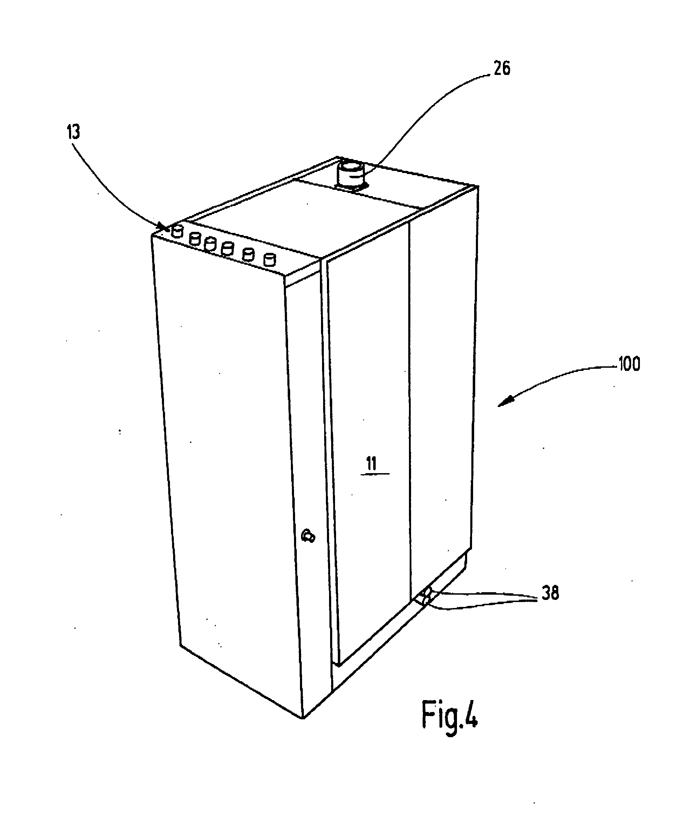

Auf der Oberseite im hinteren Bereich des Pufferspeicherbehälters 10 sind sechs Anschlüsse 13 vorgesehen, mittels denen die Heizzentrale bspw. mit einem Heizkreis, einem Brauchwasserkreis und/oder einem Solarkreis und dergleichen verbindbar ist. Im unteren, vorderen sowie seitlichen Bereich der Heizzentrale 100 sind Blechschürzen 92 vorgesehen, die von außen auf das Rahmengestell 90 aufgesetzt und mit diesem verbunden werden und das Rahmengestell 90 dadurch zusammenhalten. Mit anderen Worten erhöhen die Blechschürzen die Stabilität des Rahmens 90 bzw. der Heizzentrale 100. Die Blechschürzen 92 sind über Schraubverbindungen 91 ebenfalls am Pufferspeicherbehälter befestigt. Auf das Rahmengestell 90, die Blechschürze 92 sowie den Pufferspeicherbehälter 10 ist wiederum von außen ein Gehäuse (siehe Fig. 4) aufsetzbar. An der Vorderseite des Pufferspeicherbehälters am linken sowie am rechten Rand ist jeweils ein Anschluss 80 zur Kondensatableitung vorgesehen. Ferner ist jeweils ein solcher Anschluss 80 an der linken sowie der rechten Seite des Pufferspeicherbehälters 10 vorgesehen.

Fig. 4 zeigt eine perspektivische Ansicht einer Heizzentrale 100 mit einem diese verkleidenden Gehäuse 11. In der Ansicht von Fig. 4 sind die Anschlüsse 13 und 38 erkennbar. Ferner ist im oberen Bereich ein Abgasstutzen 26 zum Anschluss einer Abgasleitung vorgesehen, die mit dem im Inneren angeordneten Brenner (hier nicht dargestellt) verbindbar ist. Ein Anschluss für eine Gaszuführleitung für den Brenner ist aus Übersichtlichkeitsgründen nicht dargestellt. Es ist erkennbar, dass die im Vordergrund der Ansicht dargestellte Hinterseite der Heizzentrale 100 eben ausgebildet ist, so dass die Heizzentrale 100 bündig an einer Wand anliegen kann. Insgesamt ist die Heizzentrale 100 quaderförmig ausgebildet und das Gehäuse 11 besteht aus Blechverkleidungsteilen, die auf dem Pufferspeicherbehälter 10 bzw. auf ein Rahmengerüst (siehe Fig. 3) aufgesetzt werden.

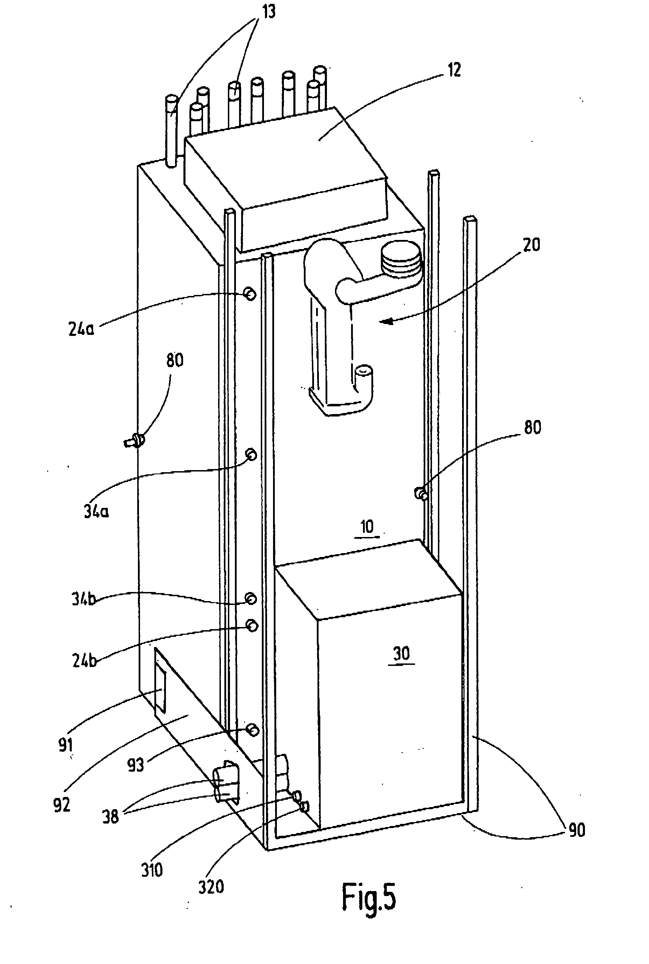

Fig. 5 zeigt eine perspektivische Ansicht einer der Heizzentrale 100 aus Fig. 3 ähnlichen Ausführungsform. Bei der Heizzentrale 100 aus Fig. 5 sind aus Übersichtlichkeitsgründen das Gehäuse sowie der vordere Teil der Blechschürze 92 weggelassen. Auf der Vorderseite des Pufferspeicherbehälters 10 im linken Randbereich sind übereinander liegend Anschlüsse 24a, 34a, 34b, 24b und 93 vorgesehen. Die Anschlüsse 24a und 24b dienen zum Anschluss des Vor- bzw. Rücklaufs des Kesselkreises. Die Anschlüsse 34a und 34b dienen zum Anschluss des Vor- bzw. Rücklaufs des Wärmepumpenkreises. Der Anschluss 93 dient zur Befüllung bzw. Entleerung des Pufferspeicherbehälters 10 mit Wärmeträgermedium (Wasser). Die Anschlüsse 310 und 320 an der Wärmepumpe dienen ebenfalls zum Anschluss der Vor- bzw. Rücklaufs des Wärmepumpenkreises. Ferner weist die Ausführungsform in Fig. 5 im oberen Bereich des Pufferspeicherbehälters 10 8 Anschlüsse 13 auf, so dass zusätzlich eine vierte Wärmequelle an den Pufferspeicherbehälter 10 zum Wärmeaustausch anschließbar ist.

### Bezugszeichenliste:

- 100: Heizzentrale

- 10: Pufferspeicherbehälter
- 11: Gehäuse
- 12: Druckausgleichsbehälter
- 13: Anschlüsse

- 20: Erste Wärmequelle / Gasbrennwertkessel
- 21: Vorlauf Kesselkreis
- 22: Rücklauf Kesselkreis
- 23: Pumpe (Kesselkreis)
- 24a: Anschluss Vorlauf Kesselkreis
- 24b: Anschluss Rücklauf Kesselkreis
- 25: Sicherheitsgruppe
- 26: Abgasstutzen

- 30: Zweite Wärmequelle / Wärmepumpe
- 31: Vorlauf Wärmepumpenkreis
- 32: Rücklauf Wärmepumpenkreis
- 33: Pumpe (Wärmepumpenkreis)
- 34a: Anschluss Vorlauf Wärmepumpenkreis
- 34b: Anschluss Rücklauf Wärmepumpenkreis
- 35: 3-Wege-Ventil
- 36: T-Stück
- 37: Kühlungs-Wärmetauscher (Wärmepumpenkreis)
- 38: Wärmepumpenanschlüsse (Kältemittel)
- 39a: Kühlungsvorlauf
- 39b: Kühlungsrücklauf
- 310: Anschluss Vorlauf an der Wärmepumpe
- 320: Anschluss Rücklauf an der Wärmepumpe

- 40: Erster Wärmetauscher / Solar-Wärmetauscher

- 50: Anschluss (für vierte Wärmequelle)

- 60: Heizkreis-Wärmetauscher

- 70: Brauchwasserkreis-Wärmetauscher

- 80: Anschluss (für Kondensatableitung)

- 90: Rahmen
- 91: Steckvorrichtung
- 92: Metallschürze
- 93: Anschluss (zur Befüllung und Entleerung des Pufferspeicherbehälters

## Patentansprüche

1. Kompakt-Heizzentrale für eine Heizanlage zur Wärmeenergieversorgung von Gebäuden, mit einem Gehäuse (11), innerhalb dessen
- ein Pufferspeicherbehälter (10) zur Wärmespeicherung und
- abgabe
- eine erste Wärmequelle (20), die mit dem Pufferspeicherbehälter (10) zum Wärmeaustausch verbunden ist, und
- eine zweite Wärmequelle (30), die mit dem Pufferspeicherbehälter (10) zum Wärmeaustausch verbunden ist,
angeordnet sind.

2. Heizzentrale gemäß Anspruch 1,
**dadurch gekennzeichnet,**
**dass** ein erster Wärmetauscher (40) zum Wärmeaustausch mit dem Pufferspeicherbehälter (10) innerhalb des Gehäuses (11) vorgesehen ist, wobei der erste Wärmetauscher (40) mit einer dritten Wärmequelle verbindbar ist.

3. Heizzentrale gemäß einem der vorhergehenden Ansprüche,
**dadurch gekennzeichnet,**
**dass** die erste Wärmequelle (20) ein Brennwertkessel, insbesondere ein durch Öl oder Gas betriebener Brennwertkessel, oder ein Durchlauferhitzer und/oder die zweite Wärmequelle (30) eine Wärmepumpe ist.

4. Heizzentrale gemäß einem der vorhergehenden Ansprüche,
**dadurch gekennzeichnet,**
**dass** ein Anschluss (50) am Pufferspeicherbehälter (10) vorgesehen ist, mittels dessen eine vierte Wärmequelle, insbesondere ein Feststoffbrenner, eine Pelletsheizung, ein Kamin oder eine Abwärmeheizung, mit dem Pufferspeicherbehälter (10) zum Wärmeaustausch verbindbar ist.

5. Heizzentrale, gemäß einem der vorhergehenden Ansprüche,
**dadurch gekennzeichnet,**
**dass** die Heizzentrale (100) eine Regelungseinrichtung umfasst, die zur Regelung der verschiedenen Wännequellen ausgebildet ist.

6. Heizzentrale gemäß Anspruch 5, wobei die Heizanlage einen Heizkreis mit Verbrauchern, der mit einem Wärmetauscher (60) mit dem Pufferspeicherbehälter (10) verbunden ist, wenigstens einen Mischerkreis und/oder einen Brauchwasserkreis, der mit einem Wärmetauscher (70) mit dem Pufferspeicherbehälter (10) verbunden ist, umfasst,
**dadurch gekennzeichnet,**
**dass** die Regelungseinrichtung zur Regelung des Heizkreises, des wenigstens einen Mischerkreises und/oder des Brauchwasserkreises ausgebildet ist.

7. Heizzentrale gemäß einem der vorhergehenden Ansprüche,
**dadurch gekennzeichnet,**
**dass** im Pufferspeicherbehälter (10) ein Brauchwasserkreis-Wärmetauscher (70) zum Anschluss eines Brauchwasserkreises an die Heizzentrale (100) vorgesehen ist, wobei der Brauchwasserkreis-Wärmetauscher (70) zu Erwärmung des Brauchwassers im Durchlaufverfahren ausgebildet ist.

8. Heizzentrale gemäß einem der vorhergehenden Ansprüche,
**dadurch gekennzeichnet,**
**dass** der Querschnitt des Pufferspeicherbehälters (10) in Polygonform, insbesondere rechteckig oder quadratisch, ausgebildet ist.

9. Heizzentrale gemäß Anspruch 8,
**dadurch gekennzeichnet,**
**dass** der Pufferspeicherbehälter (10) drucklos ausgebildet ist und insbesondere einen Druckausgleichsbehälter (12) umfasst.

10. Heizzentrale gemäß einem der vorhergehenden Ansprüche,
**dadurch gekennzeichnet,**
**dass** im Bereich der Oberseite des Gehäuses (11) Anschlüsse (13), insbesondere zum Anschluss einer dritten Wärmequelle, einer vierten Wärmequelle, eines Heizkreises und/oder eines Brauchwasserkreises, vorgesehen sind.

11. Heizzentrale gemäß Anspruch 10, wobei das Gehäuse (11) quaderförmig ausgebildet ist,
**dadurch gekennzeichnet,**
**dass** in beiden Seitenbereichen des Gehäuses jeweils ein Anschluss (38) zum Anschluss eines Kältemittelkreises an die Wärmepumpe (30) und/oder ein Anschluss (80) zum Anschluss einer Kondensatableitung vorgesehen sind.

12. Heizzentrale gemäß einem der vorhergehenden Ansprüche,
**dadurch gekennzeichnet,**
**dass** wenigstens eine der Wärmequellen, insbesondere eine Wärmepumpe (30), als Wärme-/Kühlquelle ausgebildet ist, so dass die Heizanlage sowohl zum Erwärmen als auch zum Kühlen des Gebäudes ausgebildet ist, wobei die wenigstens eine Wärmequelle mittels eines Schaltmittels, insbesondere ein Ventil (35), wahlweise von einer Betriebsart zur anderen schaltbar ist.

13. Heizzentrale nach einem der vorgehenden Ansprüche,
**dadurch gekennzeichnet,**
**dass** die Heizzentrale (100) in Modulbauweise ausgebildet ist, wobei die einzelnen Module zu einer Kompakt-Heizzentrale zusammensetzbar sind.

14. Heizanlage,
**dadurch gekennzeichnet,**
**dass** die Heizanlage eine Heizzentrale (100) nach einem der vorhergehenden Ansprüche umfasst.

15. Verfahren zur Regelung einer Heizanlage zur Wärmeenergieversorgung von Gebäuden, wobei die Heizanlage einen Brennwertkessel (20), insbesondere einen mit Gas oder Öl betriebenen Brennwertkessel, eine Wärmepumpe (30), einen Solarkreis, eine vierte Wärmequelle und eine Regelungseinrichtung umfasst,
**dadurch gekennzeichnet,**
**dass** die Regelungseinrichtung einen bestimmten Energiebedarf zur Erwärmung des Gebäudes und des Brauchwassers feststellt, die vierte Wärmequelle bei Abgabe von Wärmeenergie ansteuert, bei Nichtdeckung des festgestellten Wärmeenergiebedarfs zusätzlich den Solarkreis zur Abgabe von Wärmeenergie ansteuert, bei Nichtdeckung des festgestellten Wärmeenergiebedarfs zusätzlich die Wärmepumpe (30)zur Abgabe von Wärmeenergie ansteuert, und bei Nichtdeckung des festgestellten Wärmeenergiebedarfs zusätzlich den Brennwertkessel (20) zur Abgabe von Wärmeenergie ansteuert.
